# EUROPEAN PATENT APPLICATION

(11) **EP 4 209 399 A1**
(43) Date of publication of application: **12.07.2023**
(21) Application number: 22150313.9
(22) Date of filing: 05.01.2022
(51) Int. Cl.: B60T 13/74, B60T 13/66

(54) **BRAKE CONTROL SYSTEM FOR CONTROLLING A BRAKE SYSTEM, VEHICLE AND METHOD FOR OPERATING A BRAKE CONTROL SYSTEM**

(71) Applicant: Volvo Car Corporation, 40531 Göteborg (SE)
(72) Inventor: TRAVAGLIATI, Alessandro, 40531 Göteborg (SE); ÅGREN, Mikael, 40531 Göteborg (SE)
(74) Representative: Maiwald GmbH

(57) **Abstract**

The disclosure relates to a brake control system (38) for controlling a brake system (24) of a vehicle (10). The brake control system (38) comprises a first power supply interface (52), a second power supply interface (60), and at least one axle control unit (40, 46) being configured for controlling brake assemblies (26, 28, 30, 32) being associated with at least one axle (12, 14). The first power supply interface (52) is electrically connected to the axle control unit (40, 46) and the second power supply interface (60) is electrically connected to the axle control unit (40, 46). Moreover, a vehicle (10) is presented which comprises at least one axle (12, 14), a brake system (24) having a left brake assembly (26, 30) and a right brake assembly (28, 32) for selectively braking an associated left wheel (16, 20) of the axle (12, 14) and an associated right wheel (18, 22) of the axle (12, 14), and a brake control system (38). Furthermore, a method for operating a brake control system (38) is explained.

## Description

The present disclosure relates to a brake control system for controlling a brake system of a vehicle having at least one axle.

The disclosure further is directed to a vehicle comprising at least one axle, a brake system having a left brake assembly and a right brake assembly for selectively braking an associated left wheel of the axle and an associated right wheel of the axle, and such a brake control system.

Additionally, the disclosure relates to a method for operating a brake control system.

Brake systems and corresponding brake control systems are important safety devices for vehicles. For this reason, it is known to provide the brake systems and the corresponding brake control systems with certain fail operational capabilities. This means that the brake system and the corresponding brake control system stay operational under certain failure conditions. In other words, in case of such a failure condition, the brake system and the corresponding brake control system are still able to brake the corresponding vehicle.

This aspect is of high relevance for vehicles having a human driver and for partially or fully autonomous vehicles. In partially or fully autonomous vehicles, a situation may occur in which human interaction is not possible or only possible to a certain degree.

It is an object of the present disclosure to provide a brake control system with improved fail operational capabilities.

The problem is at least partially solved or alleviated by the subject matter of the independent claims of the present disclosure, wherein further examples are incorporated in the dependent claims.

According to a first aspect, there is provided a brake control system for controlling a brake system of a vehicle. The vehicle has at least one axle. The brake control system comprises a first power supply interface, a second power supply interface, and at least one axle control unit being configured for controlling brake assemblies being associated with the at least one axle. The first power supply interface is electrically connected to the axle control unit via a first power supply line and the second power supply interface is electrically connected to the axle control unit via a second power supply line. In such a brake control system power can be supplied to the axle control unit via the first power supply interface and the first power supply line or the second power supply interface and the second power supply line. Thus, the power supply of the axle control unit is redundant. It is understood that the first power supply interface and the second power supply interface are configured for providing power to the brake control system independent from one another. In short: the first power supply interface and the second power supply interface are independent from one another. Also the first power supply line and the second power supply line are independent from one another. This means that the first power supply line is separate from the second supply line. Consequently, in a case in which a failure occurs at the first power supply interface or the first power supply line, power can be supplied to the axle control unit via the second power supply interface and the second power supply line. If a failure occurs at the second power supply interface or the second power supply line, power can be supplied to the axle control unit via the first power supply interface and the first power supply line. In both failure conditions, the axle control unit and thus the entire brake control system stays fully operational.

It is noted that the brake control system according to the present disclosure may be configured for controlling a brake system being a hydraulic brake system. In such a brake system the brake assemblies which are controlled by the brake control system comprise at least one hydraulic actuator being configured for applying a braking force or a braking torque to an associated wheel. Alternatively or additionally, the brake control system according to the present disclosure may be configured for controlling a brake system being an electric, electromechanical or electromagnetic brake system. In such a brake system the brake assemblies which are controlled by the brake control system comprise at least one electric or electromagnetic actuator being configured for applying a braking force or a braking torque to an associated wheel.

Furthermore, the brake control system according to the present disclosure may be configured for being used in a fully autonomous vehicle, partially autonomous and/or nonautonomous vehicle.

In an example, the vehicle in which the brake control system according to the present disclosure is used, has two axles.

In an example, the axle control unit comprises a left brake assembly control unit and a right brake assembly control unit. The left brake assembly control unit is configured for controlling a left brake assembly of the vehicle's axle and the right brake assembly control unit is configured for controlling a right brake assembly of the vehicle's axle. It is understood that the terms "left" and "right" are used for the ease of explanation only. The brake assembly control units could also be designated a first one and a second one. Thus, the axle control unit comprises two separate and independent brake assembly control units, one for each wheel of the corresponding axle. This configuration has the effect that a failure in one of the left brake assembly control unit and the right brake assembly control unit does not affect the respective other.

In an example, the left brake assembly control unit is communicatively connected to a left motor controller. The right brake assembly control unit is communicatively connected to a right motor controller. Thus, also the motor controllers are independent from one another and may be controlled independently from one another via the left brake assembly control unit and the right brake assembly control unit. Thus, a defect in one of the motor controllers does not affect the respective other motor controller.

In an example, the left brake assembly control unit is communicatively connected to a left sensor unit. The right brake assembly control unit is communicatively connected to a right sensor unit. The sensor units may be configured for detecting a wheel rotation or a temperature. Moreover, each of the sensor units is configured for providing a detected sensor value to the corresponding brake assembly control unit. Thus, the brake assembly control units can be operated independently from one another.

In an example, the axle control unit comprises a power distribution unit. The first power supply line and the second power supply line are electrically connected to the power distribution unit. Thus, due to the power distribution unit, power may be supplied to the components of the axle control unit by the first power supply line or the second power supply line. For the components of the axle control unit it does not make a difference whether they receive power via the first power supply line or the second power supply line. The power distribution unit is also configured for excluding a conflict of power supply in cases where both a power supply via the first power supply line and the second power supply line is available.

In an example, the left brake assembly control unit is electrically connected to the power distribution unit and the right brake assembly control unit is electrically connected to the power distribution unit. Thus, power can be supplied to the left brake assembly control unit and the right brake assembly control unit via the power distribution unit. The power supply is very reliable.

In an example, the electric connection of the left brake assembly control unit to the power distribution unit comprises a left power adjustment element and the electric connection of the right brake assembly control unit to the power distribution unit comprises a right power adjustment element. Consequently, the power being supplied to the left brake assembly control unit and to the right brake assembly control unit can be adjusted. This is especially important in a situation in which only limited power supply is available. In such a situation, the left power adjustment element and the right power adjustment element may be used for adjusting the power being provided to the left brake assembly control unit and to the right brake assembly control unit such that the limited power supply is respected. This may lead to a reduced functionality of the left brake assembly control unit and/or the right brake assembly control unit. However, it has to be emphasized that both the left brake assembly control unit and the right brake assembly control unit remain operational all the time. The portion of power which is supplied to the left brake assembly control unit and the right brake assembly control unit may change dynamically as a function of a vehicle state or a state of the brake control system. Thus, a maximum of functionality may be guaranteed even in a situation with limited power supply.

In an example, the left power adjustment element and/or the right power adjustment element comprises a transistor, e.g. a field effect transistor. Consequently, the supplied power may be adjusted in a reliable manner.

In an example, the brake control system comprises a left power control unit being communicatively connected to the left power adjustment element and a right power control unit being communicatively connected to the right power adjustment element. Thus, the left power control element and the right power control element can be reliably controlled as described hereinabove. It is noted that each of the power control elements is communicatively connected to a separate power control unit. Consequently, the control of the power control elements is independent from one another.

In an example, the power distribution unit comprises a power distribution bridge being electrically conductive, wherein the left brake assembly control unit and the right brake assembly control unit are electrically connected to opposing ends of the power distribution bridge. Thus, power can be reliably supplied to the left brake assembly control unit and the right brake assembly control unit via the power distribution bridge.

In an example, the first power supply line and the second power supply line are electrically connected to the power distribution bridge. Thus, power can be supplied to the power distribution bridge by the first power supply line, the second power supply line or both. In other words, the power supply of the power distribution bridge is redundant. This also applies to all elements being electrically connected to the power distribution bridge.

In an example, the first power supply line is electrically connected to the power distribution bridge via a first diode and the second power supply line is electrically connected to the power distribution bridge via a second diode. As is generally known in the art, diodes have a forward direction along which the diodes are conductive. An electric current is generally not able to pass a diodes in a direction being opposed to the forward direction. Thus, using a diode, undesired currents can be avoided. It is noted that a diode is a passive element, i.e. the functionality of the diode does not rely on power supply. A brake control system having such a configuration is very robust. Errors being caused by currents having an undesired direction are avoided.

In an example, a forward direction of the diodes is directed along a power supply direction. In this context, a power supply direction is to be understood as a direction from the first power supply interface or the second power supply interface towards the axle control unit. Thus it is avoided that electric current flows from the axle control unit towards one of the power supply interfaces. This is especially useful if one of the power supply interfaces is defective. Reliable power supply of the axle control unit is guaranteed.

In an example, the brake control system comprises a further axle control unit being configured for controlling brake assemblies being associated with a further axle. The first power supply interface is electrically connected to the further axle control unit via a third power supply line and the second power supply interface is electrically connected to the further axle control unit via a fourth power supply line. Thus, the brake control system is adapted for being used in a vehicle having two axles. The effects and advantages as described above in connection with the axle control unit apply mutatis mutandis to the further axle control unit. It is further understood that all features and explanations which have been provided in connection with the axle control unit hereinabove, also apply to the further axle control unit.

According to a second aspect, there is provided a vehicle comprising at least one axle. The vehicle additionally comprises a brake system having a left brake assembly and a right brake assembly for selectively braking an associated left wheel of the axle and an associated right wheel of the axle. Moreover, the vehicle comprises a brake control system according to the present disclosure. The brake control system is coupled to the brake system for controlling the brake system. The first power supply interface is electrically connected to a first battery unit and the second power supply interface is electrically connected to a second battery unit. In such a vehicle, the brake system may be controlled in a reliable manner since power may be supplied thereto in a redundant manner using the first power supply interface and the second power supply interface. It is understood that the first battery unit and the second battery unit are independent from one another. Thus, such a vehicle has improved failure operational capabilities. More precisely, if a failure occurs at one of the first power supply interface, the second power supply interface, the first battery unit or the second battery unit, the brake control system remains fully operational. Consequently, all brake assemblies may be used in case of failure. This is an important difference with respect to known brake systems which rely on the concept of using just a portion of brake assemblies in case of power supply failure. It is noted that according to the present disclosure it may be possible that only a limited amount of power is supplied to the brake control units if a power supply failure occurs. However, none thereof will be without power.

According to a third aspect, there is provided a method for operating a brake control system. The brake control system is configured for controlling a brake system of a vehicle. The brake control system comprises a number of brake assembly control units, a first power supply interface and a second power supply interface. The method comprises:
- powering all brake assembly control units via the second power supply interface if a power supply of the first power supply interface is interrupted, and/or
- powering all brake assembly control units via the first power supply interface if a power supply of the second power supply interface is interrupted.
Thus all brake assembly control units may be supplied with power independent from a power interruption at one of the power supply interfaces. The brake control system may thus be operated with high reliability.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

It should be noted that the above examples may be combined with each other irrespective of the aspect involved. Accordingly, the method may be combined with structural features and, likewise, the brake control system and the vehicle may be combined with features described above with regard to the method.

These and other aspects of the present disclosure will become apparent from and elucidated with reference to the examples described hereinafter.

Examples of the disclosure will be described in the following with reference to the appended drawings.
- Fig. 1: shows a vehicle according the present disclosure comprising a brake control system according to the present disclosure being operable by a method according to the present disclosure,
- Fig. 2: schematically shows the vehicle of Figure 1 in a first operational situation,
- Fig. 3: schematically shows the vehicle of Figure 1 in a second operational situation, and
- Fig. 4: schematically shows the vehicle of Figure 1 in a third operational situation.

The figures are merely schematic representations and serve only to illustrate examples of the disclosure. Identical or equivalent elements are in principle provided with the same reference signs.

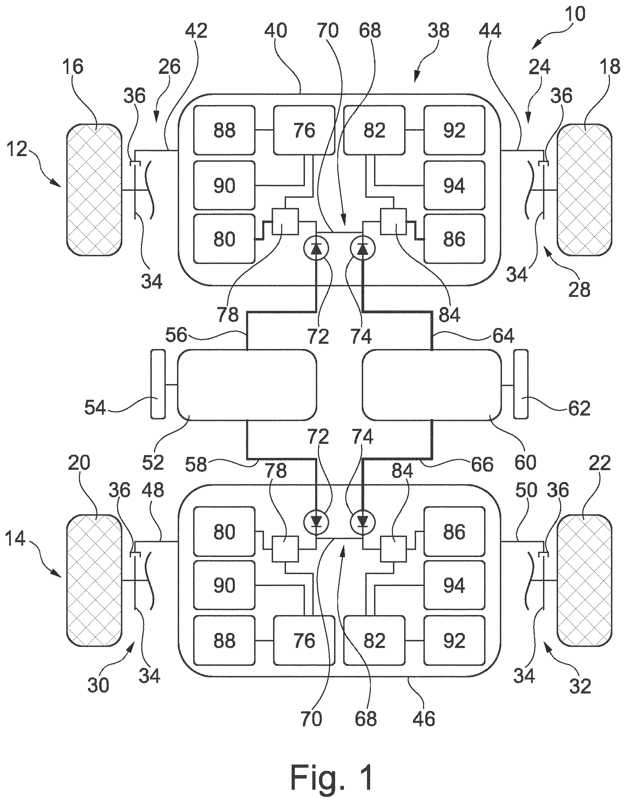

Figure 1 shows a vehicle 10.

The vehicle hast a first axle 12 which is a front axle and a second axle 14 which is a rear axle.

On the first axle 12, two wheels 16, 18 are mounted, wherein wheel 16 is a left wheel and wheel 18 is a right wheel.

Also on the rear axle 14 two wheels 20, 22 are mounted. Wheel 20 is a left wheel and wheel 22 is a right wheel.

The vehicle 10 also comprises a brake system 24.

The brake system 24 has four brake assemblies 26, 28, 30, 32.

Brake assembly 26 is configured for selectively braking wheel 16. Consequently, brake assembly 26 is a left brake assembly of the front axle 12.

Brake assembly 28 is configured for selectively braking wheel 18. Thus, brake assembly 28 is a right brake assembly of the front axle 12.

Brake assembly 30 is configured for selectively braking wheel 20. Brake assembly 30 is a left brake assembly of the rear axle 14.

Brake assembly 32 is configured for braking wheel 22. Consequently, brake assembly 32 is a right brake assembly of the rear axle 14.

In the example shown in the figures, each brake assembly 26, 28, 30, 32 comprises a brake disk 34 and a corresponding brake caliper 36 with a brake actuator for selectively engaging the brake disk 34.

The vehicle 10 additionally comprises a brake control system 38 for controlling the brake system 24. To this end, the brake control system 38 is coupled to the brake system 24 as will be explained in detail further below.

The brake control system 38 comprises a first axle control unit 40 being configured for controlling the brake assemblies 26, 28 being associated with the first axle 12, i.e. the front axle 12.

Thus, the first axle control unit 40 is a front axle control unit. The first axle control unit 40 can also be called a front electronic control unit (ECU) or a front brake control unit (BCU).

The brake assembly 26, more precisely the corresponding brake caliper 36, is communicatively connected to the first axle control unit 40 via a left front control line 42.

In the same manner, the brake assembly 28, more precisely the corresponding brake caliper 36, is communicatively connected to the first axle control unit 40 via a right front control line 44.

Furthermore, the brake control system 38 comprises a second axle control unit 46 being configured for controlling the brake assemblies 30, 32 being associated with the second axle 14, i.e. the rear axle 14.

Consequently, the second axle control unit 46 is a rear axle control unit. The second axle control unit 46 can be designated a rear electronic control unit (ECU) or a rear brake control unit (BCU).

The second axle control unit 46 may also be designated a further axle control unit 46. In this case, the rear axle 14 is a further axle 14.

The brake assembly 30, more precisely the corresponding brake caliper 36, is communicatively connected to the second axle control unit 46 via a left rear control line 48.

In the same manner, the brake assembly 32, more precisely the corresponding brake caliper 36, is communicatively connected to the second axle control unit 46 via a right rear control line 50.

The brake control system 38 comprises a first power supply interface 52.

In the example shown, the first power supply interface 52 of the brake control system 38 is electrically connected to a first battery unit 54 of the vehicle 10. Thus, electric energy is provided at the first power supply interface 52 by the first battery unit 54.

Moreover, the first power supply interface 52 is electrically connected to the first axle control unit 40 via a power supply line being designated a first power supply line 56 and electrically connected to the second axle control unit 46 via a power supply line being designated a third power supply line 58.

The brake control system 38 also comprises a second power supply interface 60.

The second power supply interface 60 is electrically connected to a second battery unit 62 of the vehicle 10. Consequently, the second battery unit 62 can supply electric energy to the second power supply interface 60.

Additionally, the second power supply interface 60 is electrically connected to the first axle control unit 40 via a power supply line being designated a second power supply line 64 and electrically connected to the second axle control unit 46 via a power supply line being designated a fourth power supply line 66.

It is noted that the first power supply interface 52 and the second power supply interface 60 are structurally separate from one another. Consequently, the first power supply interface 52 and the second power supply interface 60 may be operated independently from one another.

The same applies to the first battery unit 54 and the second battery unit 62. This means that the first battery unit 54 and the second battery unit 62 are separate entities and can be operated independently from one another.

The first axle control unit 40 comprises a power distribution unit 68 to which the first power supply line 56 and the second power supply line 64 are electrically connected.

More precisely, the power distribution unit 68 comprises a power distribution bridge 70 being electrically conductive.

The first power supply line 56 is electrically connected to the power distribution bridge 70 via a first diode 72.

The second power supply line 64 is electrically connected to the power distribution bridge 70 via a second diode 74.

A forward direction of both the first diode 72 and the second diode 74 is directed along a power supply direction, i.e. along a direction from the respective first power supply interface 52 or second power supply interface 60 towards the power distribution bridge 70.

Consequently, due to the diodes 72, 74 an electric current can flow from the first power supply interface 52 and/or the second power supply interface 60 towards the power distribution bridge 70, but not in the opposite direction.

A left brake assembly control unit 76 is electrically connected to a first, left end of the power distribution bridge 70 via a left power adjustment element 78.

The left power adjustment element 78 is communicatively connected to a left power control unit 80 such that power being supplied from the power distribution unit 68, more precisely from the power distribution bridge 70, to the left brake assembly control unit 76 can be adjusted using the left power adjustment element 78 and the left power control unit 80.

In the same manner, a right brake assembly control unit 82 is electrically connected to a second, right end of the power distribution bridge 70 via a right power adjustment element 84.

The right power adjustment element 84 is communicatively connected to a right power control unit 86 such that power being supplied from the power distribution unit 68, more precisely from the power distribution bridge 70, to the right brake assembly control unit 82 can be adjusted using the right power adjustment element 84 and the right power control unit 86.

The left brake assembly control unit 76 of the first axle control unit 40 is configured for controlling the left brake assembly 26.

To this end, the left brake assembly control unit 76 is communicatively connected to a left motor controller 88 being configured for controlling the operation of the brake caliper 36 of the left brake assembly 26 of the front axle 12.

For the same purpose, the left brake assembly control unit 76 is communicatively connected to a left sensor unit 90.

Thus, the left brake assembly 26 can be controlled according to the principles of closed loop control.

The right brake assembly control unit 82 of the first axle control unit 40 is configured for controlling the right brake assembly 28.

To this end, the right brake assembly control unit 82 is communicatively connected to a right motor controller 92 being configured for controlling the operation of the brake caliper 36 of the right brake assembly 28 of the front axle 12.

For the same purpose, the right brake assembly control unit 82 is communicatively connected to a right sensor unit 94.

Thus, also the right brake assembly 28 can be controlled according to the principles of closed loop control.

The second axle control unit 46 is structurally identical to the first axle control unit 40. In contrast to the first axle control unit 40, the third power supply line 58 and the fourth power supply line 66 are connected to the power distribution unit 68. Moreover, the second axle control unit 46 is configured for controlling the left brake assembly 30 and the right brake assembly 32.

Beyond that, reference is made to the above explanations. It is noted that in connection with the second axle control unit 46 the same reference signs are used as in connection with the first axle control unit 40.

The brake control system 38 may be operated in accordance with a method for operating a brake control system 38 and the associated vehicle 10.

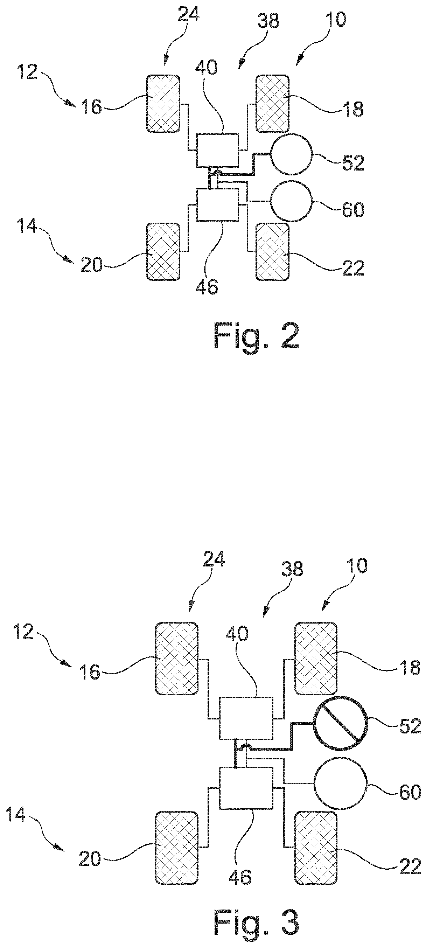

In order to explain this method, Figures 2 to 4 show three exemplary operational situations of the brake control system 38.

Figure 2 shows an operational situation in which no error or failure has occurred. In this situation, the brake control system 38 can be powered via the first power supply interface 52 and the second power supply interface 60. If high power is needed, both power supply interfaces 52, 60 can be used at the same time. If comparatively little power is needed, it is also possible to use just one of the power supply interfaces 52, 60 for powering the brake control system 38.

Figure 3 shows a situation in which a failure has occurred which leads to the fact that the first power supply interface 52 cannot be used for powering the brake control system 38. In other words, power supply via the first power supply interface 52 is interrupted. Due to the electric connections of the power supply interfaces 52, 60 as has been explained above, all brake assembly control units 76, 82 can still be powered via the second power supply interface 60.

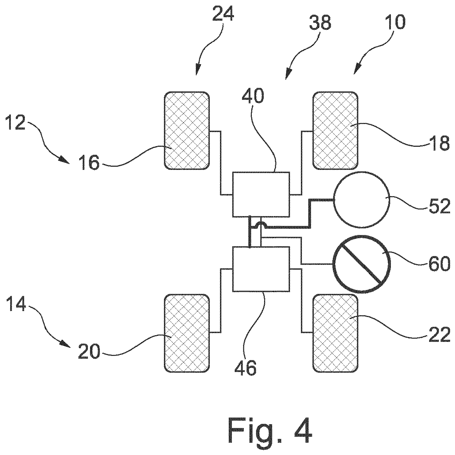

Figure 4 shows a situation in which a failure has occurred which leads to the fact that the second power supply interface 60 cannot be used for powering the brake control system 38. In other words, power supply via the second power supply interface 60 is interrupted. Due to the electric connections of the power supply interfaces 52, 60 as has been explained above, all brake assembly control units 76, 82 can still be powered via the first power supply interface 52.

Thus, also in situation of interrupted power supply, all brake assembly control units 76, 82 are operational and thus all brake assemblies 26, 28, 30, 32 can be used for braking the vehicle 10.

It is noted that in case of a power interruption at one of the power supply interfaces 52, 60 in combination with a very high power demand, a situation may occur in which the total power demand cannot be satisfied. However, the power adjustment elements 78, 84 may be operated such that the available power is distributed in a desired manner. In simplified words, each of the brake assembly control units 76, 82 may be supplied with less power than desired, but none of the brake assembly control units 76, 82 is without power.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 10: vehicle
- 12: first axle, front axle
- 14: second axle, rear axle
- 16: left wheel of the first axle
- 18: right wheel of the first axle
- 20: left wheel of the second axle
- 22: right wheel of the second axle
- 24: brake system
- 26: left brake assembly of the first axle
- 28: right brake assembly of the first axle
- 30: left brake assembly of the second axle
- 32: right brake assembly of the second axle
- 34: brake disk
- 36: brake caliper
- 38: brake control system
- 40: first axle control unit
- 42: left front control line
- 44: right front control line
- 46: second axle control unit
- 48: left rear control line
- 50: right rear control line
- 52: first power supply interface
- 54: first battery unit
- 56: first power supply line
- 58: third power supply line
- 60: second power supply interface
- 62: second battery unit
- 64: second power supply line
- 66: fourth power supply line
- 68: power distribution unit
- 70: power distribution bridge
- 72: first diode
- 74: second diode
- 76: left brake assembly control unit
- 78: left power adjustment element
- 80: left power control unit
- 82: right brake assembly control unit
- 84: right power adjustment element
- 86: right power control unit
- 88: left motor controller
- 90: left sensor unit
- 92: right motor controller
- 94: right sensor unit

## Claims

1. Brake control system (38) for controlling a brake system (24) of a vehicle (10) having at least one axle (12), the brake control system (38) comprising a first power supply interface (52), a second power supply interface (60), and at least one axle control unit (40) being configured for controlling brake assemblies (26, 28) being associated with the at least one axle (12),
the first power supply interface (52) being electrically connected to the axle control unit (40) via a first power supply line (56) and the second power supply interface (60) being electrically connected to the axle control unit (40) via a second power supply line (64).

2. The brake control system (38) according to claim 1, wherein the axle control unit (40) comprises a left brake assembly control unit (76) and a right brake assembly control unit (82).

3. The brake control system (38) according to claim 2, wherein the left brake assembly control unit (76) is communicatively connected to a left motor controller (88) and wherein the right brake assembly control unit (82) is communicatively connected to a right motor controller (92).

4. The brake control system (38) according to claim 2 or 3, wherein the left brake assembly control unit (76) is communicatively connected to a left sensor unit (90) and wherein the right brake assembly control unit (82) is communicatively connected to a right sensor unit (94).

5. The brake control system (38) according to any one of the preceding claims, wherein the axle control unit (40) comprises a power distribution unit (68) and the first power supply line (56) and the second power supply line (64) are electrically connected to the power distribution unit (68).

6. The brake control system (38) according to any one of claims 2 to 4 and claim 5, wherein the left brake assembly control unit (76) is electrically connected to the power distribution unit (68) and the right brake assembly control unit (82) is electrically connected to the power distribution unit (68).

7. The brake control system (38) according to claim 6, wherein the electric connection of the left brake assembly control unit (76) to the power distribution unit (68) comprises a left power adjustment element (78) and wherein the electric connection of the right brake assembly control unit (82) to the power distribution unit (68) comprises a right power adjustment element (84).

8. The brake control system (38) according to claim 7, comprising a left power control unit (80) being communicatively connected to the left power adjustment element (78) and a right power control unit (86) being communicatively connected to the right power adjustment element (84).

9. The brake control system (38) according to any one of claims 6 to 8 wherein the power distribution unit (68) comprises a power distribution bridge (70) being electrically conductive, wherein the left brake assembly control unit (76) and the right brake assembly control unit (82) are electrically connected to opposing ends of the power distribution bridge (70).

10. The brake control system (38) according to claim 9, wherein the first power supply line (56) and the second power supply line (64) are electrically connected to the power distribution bridge (70).

11. The brake control system (38) according to claim 10, wherein the first power supply line (56) is electrically connected to the power distribution bridge (70) via a first diode (72) and the second power supply line (64) is electrically connected to the power distribution bridge (70) via a second diode (74).

12. The brake control system (38) according to claim 11, wherein a forward direction of the diodes (72, 74) is directed along a power supply direction.

13. The brake control system (38) according to any one of the preceding claims, comprising a further axle control unit (46) being configured for controlling brake assemblies (30, 32) being associated with a further axle (14), the first power supply interface (52) being electrically connected to the further axle control unit (46) via a third power supply line (58) and the second power supply interface (60) being electrically connected to the further axle control unit (46) via a fourth power supply line (66).

14. A vehicle (10) comprising at least one axle (12, 14), a brake system (24) having a left brake assembly (26, 30) and a right brake assembly (28, 32) for selectively braking an associated left wheel (16, 20) of the axle (12, 14) and an associated right wheel (18, 22) of the axle (12, 14), and a brake control system (38) according to any one of the preceding claims being coupled to the brake system (24) for controlling the brake system (24), the first power supply interface (52) being electrically connected to a first battery unit (54) and the second power supply interface (60) being electrically connected to a second battery unit (62).

15. A method for operating a brake control system (38) for controlling a brake system (24) of a vehicle (10), wherein the brake control system (38) comprises a number of brake assembly control units (76, 82), a first power supply interface (52) and a second power supply interface (60), comprising:
- powering all brake assembly control units (76, 82) via the second power supply interface (60) if a power supply of the first power supply interface (52) is interrupted, and/or
- powering all brake assembly control units (76, 82) via the first power supply interface (52) if a power supply of the second power supply interface (60) is interrupted.

## Amended claims

### Amended claims in accordance with Rule 137(2) EPC.

1. Brake control system (38) for controlling a brake system (24) of a vehicle (10) having at least one axle (12), the brake control system (38) comprising a first power supply interface (52), a second power supply interface (60), and at least one axle control unit (40) being configured for controlling brake assemblies (26, 28) being associated with the at least one axle (12),
the first power supply interface (52) being electrically connected to the axle control unit (40) via a first power supply line (56) and the second power supply interface (60) being electrically connected to the axle control unit (40) via a second power supply line (64),
**characterized in that** the axle control unit (40) comprises a power distribution unit (68) and the first power supply line (56) and the second power supply line (64) are electrically connected to the power distribution unit (68).

2. The brake control system (38) according to claim 1, wherein the axle control unit (40) comprises a left brake assembly control unit (76) and a right brake assembly control unit (82).

3. The brake control system (38) according to claim 2, wherein the left brake assembly control unit (76) is communicatively connected to a left motor controller (88) and wherein the right brake assembly control unit (82) is communicatively connected to a right motor controller (92).

4. The brake control system (38) according to claim 2 or 3, wherein the left brake assembly control unit (76) is communicatively connected to a left sensor unit (90) and wherein the right brake assembly control unit (82) is communicatively connected to a right sensor unit (94).

5. The brake control system (38) according to any one of claims 2 to 4, wherein the left brake assembly control unit (76) is electrically connected to the power distribution unit (68) and the right brake assembly control unit (82) is electrically connected to the power distribution unit (68).

6. The brake control system (38) according to claim 5, wherein the electric connection of the left brake assembly control unit (76) to the power distribution unit (68) comprises a left power adjustment element (78) and wherein the electric connection of the right brake assembly control unit (82) to the power distribution unit (68) comprises a right power adjustment element (84).

7. The brake control system (38) according to claim 6, comprising a left power control unit (80) being communicatively connected to the left power adjustment element (78) and a right power control unit (86) being communicatively connected to the right power adjustment element (84).

8. The brake control system (38) according to any one of claims 5 to 7 wherein the power distribution unit (68) comprises a power distribution bridge (70) being electrically conductive, wherein the left brake assembly control unit (76) and the right brake assembly control unit (82) are electrically connected to opposing ends of the power distribution bridge (70).

9. The brake control system (38) according to claim 8, wherein the first power supply line (56) and the second power supply line (64) are electrically connected to the power distribution bridge (70).

10. The brake control system (38) according to claim 9, wherein the first power supply line (56) is electrically connected to the power distribution bridge (70) via a first diode (72) and the second power supply line (64) is electrically connected to the power distribution bridge (70) via a second diode (74).

11. The brake control system (38) according to claim 10, wherein a forward direction of the diodes (72, 74) is directed along a power supply direction.

12. The brake control system (38) according to any one of the preceding claims, comprising a further axle control unit (46) being configured for controlling brake assemblies (30, 32) being associated with a further axle (14), the first power supply interface (52) being electrically connected to the further axle control unit (46) via a third power supply line (58) and the second power supply interface (60) being electrically connected to the further axle control unit (46) via a fourth power supply line (66).

13. A vehicle (10) comprising at least one axle (12, 14), a brake system (24) having a left brake assembly (26, 30) and a right brake assembly (28, 32) for selectively braking an associated left wheel (16, 20) of the axle (12, 14) and an associated right wheel (18, 22) of the axle (12, 14), and a brake control system (38) according to any one of the preceding claims being coupled to the brake system (24) for controlling the brake system (24), the first power supply interface (52) being electrically connected to a first battery unit (54) and the second power supply interface (60) being electrically connected to a second battery unit (62).

14. A method for operating a brake control system (38) according to any one of claims 1 to 12, comprising:
- powering all brake assembly control units (76, 82) via the second power supply interface (60) if a power supply of the first power supply interface (52) is interrupted, and/or
- powering all brake assembly control units (76, 82) via the first power supply interface (52) if a power supply of the second power supply interface (60) is interrupted.
